**Europäisches Patentamt**

**European Patent Office**

**Office européen des brevets**

(11) Veröffentlichungsnummer: **0 483 399 A1**

# EUROPÄISCHE PATENTANMELDUNG

(21) Anmeldenummer: **90120804.1**

(22) Anmeldetag: **30.10.90**

(51) Int. Cl.5: **G06F 7/02**, G06F 1/035, G06F 7/50

(43) Veröffentlichungstag der Anmeldung:
**06.05.92 Patentblatt 92/19**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Haken, Klaus**
**Platenstrasse 15**
**W-8520 Erlangen(DE)**
Erfinder: **Wiegand, Hermann-Josef**
**Wellerstädter Weg 6**
**W-8523 Baiersdorf(DE)**

(54) **Einrichtung zum Vergleich zweier dual kodierter Daten.**

(57) Ein schneller, flexibler Hardware-Vergleicher wird unter Verwendung von Schreib-Lesespeichern (RAMs) realisisert, indem an einer bestimmten, dem Vergleichsdatum (Sollwert) entsprechenden Adresse eine Kennung abgelegt wird, welche bei Adressierung mit dem zu vergleichenden Datum (Istwert) nur im Fall der Übereinstimmung auslesbar ist. Zur Reduzierung der in den RAMs zu dekodierenden Adressen werden die erforderlichen Adreßleitungen gleichmäßig auf mehrere Schreib-Lesespeicher verteilt. Die Erfindung ist als Adreßvergleicher beim Softwaretest einsetzbar und bei zusätzlicher Ablage der jeweiligen Adreßdifferenz zur Sollwertadresse in den RAMs als Soll-Istwertvergleicher in digitalen Regelkreisen.

FIG 4

Die vorliegende Erfindung betrifft eine Einrichtung zum Vergleich zweier dual kodierter Daten, wie sie beispielsweise zum schnellen Adreßvergleich in Rechnersystemen für den Test und die Diagnose der Software oder in digitalen Regelkreisen zum Soll-Istwert-Vergleich einsetzbar ist.

Bei üblichen Hardware-Vergleichern werden die Daten unter Verwendung von Gattern oder Komparatoren unmittelbar Bit für Bit abgeprüft. Dies führt jedoch bei den in den heutigen Rechenanlagen verwendeten Bitbreiten der Datenwörter zu einer entsprechend großen Anzahl von Bauteilen, was insbesondere wegen des dadurch bedingten Platzbedarfes oft nicht tolerierbar ist.

Nach der EP-A1 0 215 252 ist es zur Realisierung eines elektronischen Nockenschaltwerkes bekannt, einen Schreib-Lesespeicher zu benutzen, der von einer Wegmeßeinrichtung adressengesteuert Kennsignale an nachgeschaltete Einrichtungen ausgibt. Das Vorhandensein eines Nockens wird durch eine bestimmte, an einer festen Adresse im Speicher abgelegten Kennung simuliert und bei jeder Änderung des von der Wegmeßeinrichtung ausgegebenen Adreßwortes kann geprüft werden, ob diese bestimmte Kennung aufgetreten ist und im Falle ihres Auftretens kann dann die sonst von einem Nocken zu bewirkende Schalthandlung eingeleitet werden. Ein solcher Hardware-Vergleicher zeichnet sich zwar durch eine geringe Anzahl von Bauteilen aus, sein Adreßraum ist jedoch für größere Bitbreiten, wie z.B. 24 und darüber, nicht mehr realisierbar.

Die Erfindung stellt sich die Aufgabe in Abwandlung der zuvor beschriebenen Vergleichsmethode für eine Einrichtung der eingangs genannten Art die Anzahl der zu dekodierenden Adressen zu reduzieren. Diese Aufgabe gelingt erfindungsgemäß mit den im Hauptanspruch angegebenen Merkmalen.

Die Erfindung samt ihren weiteren Ausgestaltungen, welche in den Unteransprüchen wiedergegeben sind, soll nachstehend anhand der Figuren veranschaulicht werden. Es zeigen

Figur 1
den grundsätzlichen Aufbau eines RAM,
Figur 2
einen erfindungsgemäßen Adreßvergleicher,
Figur 3
ein Beispiel für die gruppenweise Auswertung von Teilinformationen,
Figur 4
einen Vergleicher für acht Adressen,
Figur 5
das Grundelement eines Soll-Istwert-Vergleichers,
Figur 6 bis 8
zwei äquivalente Ausführungsformen für in digitalen Zweipunkt- oder Dreipunktregelungen einsetzbaren Soll-Istwert-Vergleicher,
Figur 9 und 10
zwei Ausführungsformen von Soll-Istwert-Vergleichern mit Ausgabe von Betrag und Vorzeichen der Regelabweichung,
Figur 11
ein numerisches Beispiel zur Bildung der Regelabweichung,
Figur 12
die Realisierung eines Soll-Istwert-Vergleichers mit mehr als zwei Adreßleitungsgruppen.

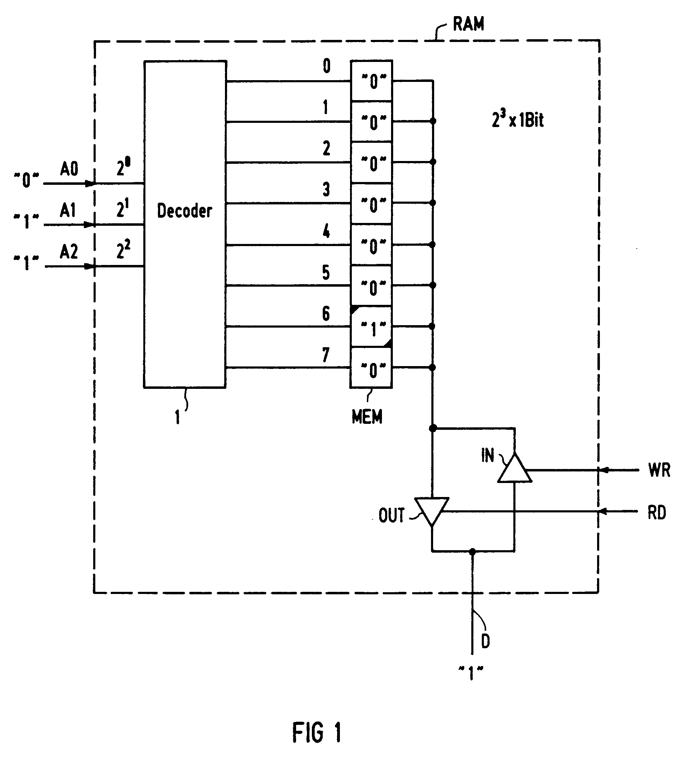

Figur 1 zeigt den grundsätzlichen Aufbau eines 1-bitbreiten Speichers am Beispiel eines auch als RAM (Random Access Memory) bezeichneten Schreib-Lesespeichers. Er weist drei Adreßeingänge auf, an welchen Adreßleitungen A0, A1 und A2 angeschlossen sind. Diese beaufschlagen die Eingänge eines internen Decoders, welcher die $2^3$ möglichen Signalkombinationen der Adreßleitungen A0 bis A2 in acht Adressen 0 bis 7 entschlüsselt, indem er für jede einzelne Signalkombination nur an einem seiner acht Ausgangsleitungen ein Ansteuersignal für eine der mit MEM bezeichneten Speicherzellen ausgibt. Der Inhalt der jeweils durch ihre Adreßansteuerung ausgewählten Speicherzelle kann entweder mittels eines Lesebefehls RD über ein Datentor OUT auf die Ausgangsleitung D ausgegeben werden oder es kann unter Aktivierung des Datentors IN durch einen Schreibbefehl WR in diese Speicherzelle das an der Datenleitung D anliegende Signal übernommen werden, d.h. sie beschrieben werden. Weisen, wie dargestellt, die Adreßleitungen A2 und A1 den Wert logisch "1" und die Adreßleitung A0 den Signalzustand logisch "0" auf und wird an die Datenleitung D der Wert logisch "1" gelegt, dann wird mit dem Schreibbefehl WR dieser Wert in die Speicherzelle mit der Adresse 6 eingeschrieben. Andererseits wird sich bei einem so geladenen Speicher bei Aktivierung des Datentores OUT durch den Lesebefehl RD nur dann das Signal logisch "1" ergeben, wenn die Adreßleitungen mit der dargestellten Signalkombination, nämlich dual 6 beaufschlagt sind und jede andere Signalkombination der Adreßleitungen A0 bis A2 ergibt beim Auslesen des Speichers den Wert logisch "0". So kann ermittelt werden, ob ein beliebiges, dual kodiertes Datum, welches die Adreßleitungen des RAMs beaufschlagt, mit einem Vergleichsdatum übereinstimmt, wenn an einer durch das Vergleichsdatum bestimmten Adresse eine für die Äquivalenz der beiden Daten charakteristische Information, beim dargestellten Beispiel logisch "1", abgelegt ist. Der Vergleich zweier Daten wird sozusagen zurückgeführt auf einen Ortsvergleich im Schreib-Lesespeicher.

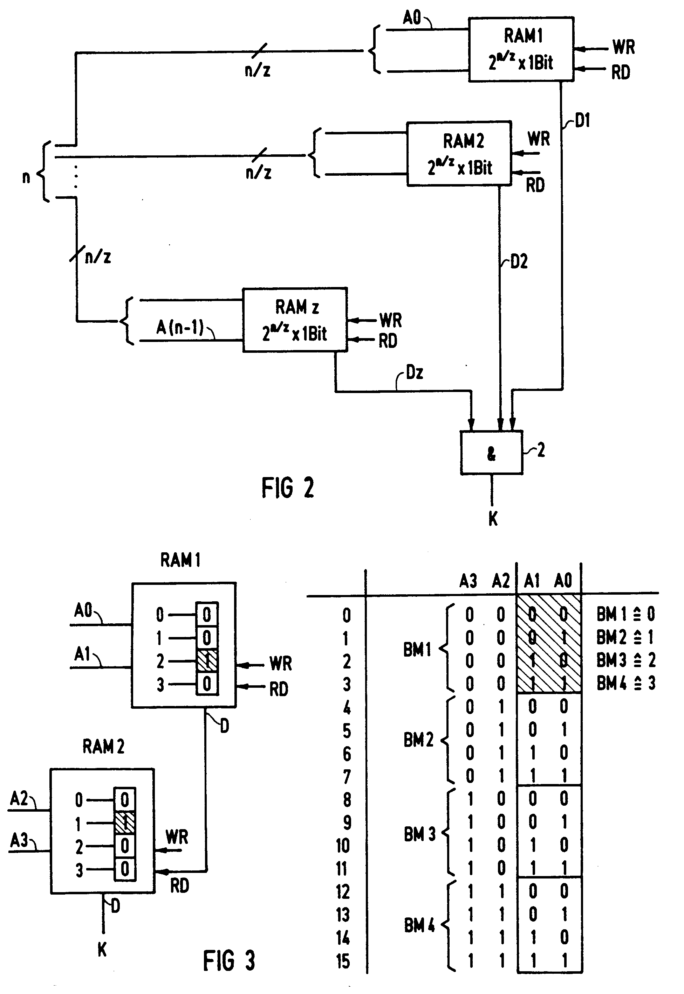

Figur 2 zeigt in allgemeiner Form einen Adreßvergleicher, bei dem erfindungsgemäß die Zahl der im Speicher zu dekodierenden Adressen reduziert werden kann. Es sind z 1-bitbreite Schreib-Lesespeicher RAM1 bis RAMz vorgesehen und die für die Bildung der Speicheradressen erforderlichen n-Adreßleitungen sind gruppenweise auf die einzelnen Schreib-Lesespeicher verteilt, so daß z Gruppen unterschiedlicher Wertigkeit mit jeweils n/z Adreßleitungen den Schreib-Lesespeichern zugeführt sind. Es wird also die zu vergleichende n-stellige Information in z Teilinformationen aufgeteilt, welche jeweils n/z-stellig sind und jeweils in einem eigenen Schreib-Lesespeicher dekodiert werden, dessen Datenausgang jeweils nur bei der der Teilvergleichsinformation zugeordneten Teiladresse logisch "1", d.h. "wahr" ist. Die Datenausgänge aller Schreib-Lesespeicher sind mit den Eingängen eines UND-Gatters 2 verbunden, dessen Ausgangssignal K den Wert logisch "1" aufweist, wenn als Kriterium des Übereinstimmens von Vergleichsdatum mit dem zu vergleichenden Datum jeweils gruppenweise am zugeordneten Datenausgang D1 bis Dz der Wert logisch "1" auftritt. Das aufzubauende Speichervolumen wird durch diese Anordnung auf $z.2^{n/z}$ reduziert. Je größer man also z wählt, desto kleiner wird das erforderliche Speichervolumen, allerdings steigt damit auch die Zahl der erforderlichen Speicherbausteine, welche proportional mit z wächst. In der Regel wird man einen Kompromiß zwischen dem geringstmöglichen Ausbau der einzelnen Speicher und der Minimierung der Anzahl der Speicherbausteine eingehen müssen.

Zur Veranschaulichung der gruppenweisen Auswertung der Teilinformationen an einem übersichtlich gehaltenen Beispiel dient die Figur 3. In deren rechten Teil sind bei dem mit vier Adreßleitungen A0 bis A3 darstellbaren Wertebereich von 0 bis 15 die zugehörigen Kombinationen der Signalzustände dieser Adreßleitungen dargestellt. Faßt man die Adreßleitungen A0 und A1 zu einer niedriger wertigen Gruppe mit dem Gewicht $4^0 = 1$ und die Adreßleitungen A2 und A3 zu einer höher wertigen Gruppe mit dem Gewicht $4^1 = 4$ zusammen und läßt den Adreßwert von 0 bis 15 laufen, dann ergeben sich bei der niedriger wertigen Adreßleitungsgruppe A0, A1 vier Bitmuster BM1 bis BM4, welche sich dreimal zyklisch wiederholen. Dieselben Bitmuster treten in gleicher zyklischer Folge auch bei der höher wertigen Adreßleitungsgruppe A2 und A3 auf, wobei jedoch für einen vollständigen Zyklus dieser Bitmuster bei der niedriger wertigen Adreßleitungsgruppe das Bitmuster der höher wertigen Adreßleitungsgruppe gleich bleibt. Analog einer mechanischen Getriebeübersetzung von 4 : 1, wo auf vier Umdrehungen des einen Zahnrads eine Umdrehung des anderen kommt, treten pro Bitmuster der höher wertigen Adreßleitungsgruppe A2, A3 bei der niedriger wertigen Adreßleitungsgruppe A0, A1 die Bitmusterfolge BM1 bis BM4 auf. Es ist daher möglich, unter Berücksichtigung der Gewichtung der Gruppen, 16 Adressen mit zwei Schreib-Lesespeichern zu dekodieren, von denen jeder für sich nur vier Adressen zu dekodieren hat. Im linken Teil der Figur 3 sind den Adreßleitungsgruppen A0, A1 und A2, A3 zwei Schreib-Lesespeicher RAM1 und RAM2 zugeordnet und wie bei Figur 1 als Vergleichsdatum der Wert 6 angenommen, so daß - wie schraffiert angedeutet - an der entsprechenden Teiladresse der Wert 1 abgelegt ist. Diese Teiladresse ist 2 beim RAM1 und 1 beim RAM2. In äquivalenter Abwandlung zu Figur 2 erfolgt die UND-Verknüpfung der beiden Datenausgänge dadurch, daß der Datenausgang des der niedriger wertigen Adreßleitungsgruppe zugeordneten Schreib-Lesespeichers mit dem Lesesteuereingang RD des der höher wertigen Adreßleitungsgruppe zugeordneten Schreib-Lesespeichers verbunden ist und so den Lesebefehl liefert. Damit kann ein UND-Gatter eingespart werden. Beginnt jetzt der Wert des zu vergleichenden, die Adressenleitungen A0 bis A3 beaufschlagenden Datums von 0 bis 15 zu steigen, dann wird bei dem von der niedriger wertigen Adreßleitungsgruppe beaufschlagten RAM1 der Datenausgang bei den Werten 2, 6, 10 und 14 (A0 = 0 A1 = 1) den Wert logisch "1" annehmen, jedoch nur dann, wenn zusätzlich auch noch A2 = 1 und A3 = 0 vorliegt, was beim Wert des zu vergleichenden Datums von 6 der Fall ist, kann der Wert logisch "1" aus dem Schreib-Lesespeicher RAM2 ausgelesen werden.

Das in der Figur 2 dargestellte und anhand der Figur 3 erläuterte Prinzip läßt sich bei jeder Bitbreite, d.h. bei jeder Stellenanzahl n der dual kodierten Information und für jede Gruppenanzahl z realisieren und beruht im Grunde darauf, eine n-stellige Dualzahl in z-Gruppen mit jeweils n/z-Stellen aufzuteilen und in einem $2^{n/z}$-adigen Zahlensystem zu verarbeiten.

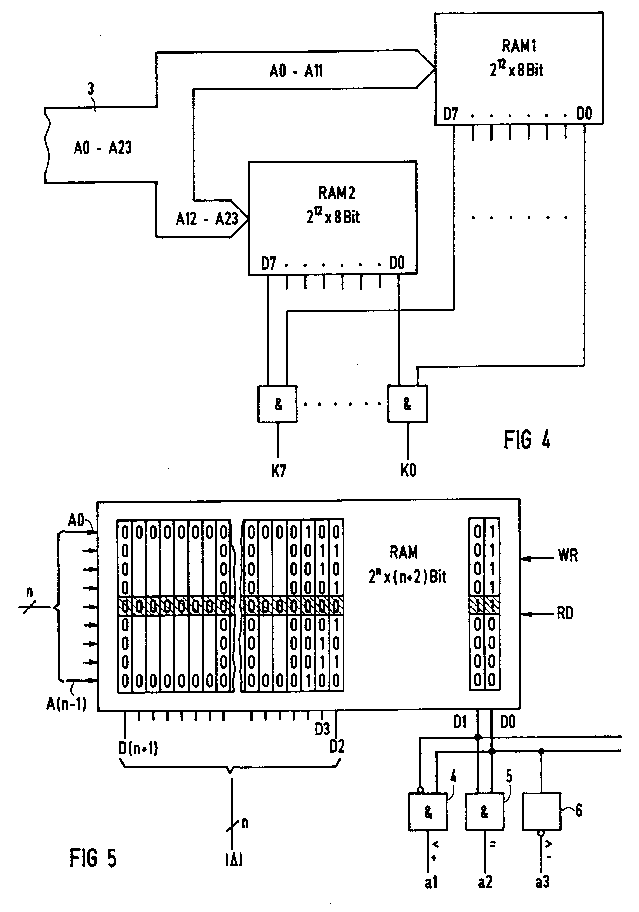

Figur 4 zeigt ein Ausführungsbeispiel der Erfindung, mit welchem bei einem Adreßbus mit 24 Adreßleitungen A0 bis A23 ein Adreßvergleich bezüglich acht Sollwertadressen vorgenommen werden soll. Bei Verwendung eines einzigen Speichers müßten bei diesem Beispiel in demselben $2^{24} \approx 16.10^6$ Adressen dekodiert werden. Es werden daher nach der Erfindung die 24 Adreßleitungen des Adreßbusses 3 je zur Hälfte auf die Schreib-Lesespeicher RAM1 und RAM2 aufgeteilt, welche jeweils 8-bitbreit sind. In den zu den Datenausgängen D0 bis D7 gehörenden Spalten jedes der beiden Schreib-Lesespeicher wird jeweils gemäß dem in Figur 3 erläuterten Prinzip, die zu jeweils einer bestimmten Teiladresse charakteristische Information, nämlich logisch "1" abgelegt; die jeweils zu einer bestimmten Adresse gehörenden Datenausgangsleitungen D0 bis D7 sind den Eingängen von UND-Gattern zugeführt und bei der Abfrage entstehen dann an den Ausgängen dieser UND-Gatter die Koinzidenzsignale K0 bis K7, falls die am Adreßbus anliegende Adresse mit einer der bestimmten Adressen übereinstimmt. Die Anordnung gemäß Figur 4 entspricht der Anordnung gemäß Figur 2 mit n = 24 und z = 2 sowie entsprechend dem Mehrfachvergleich mehrbitbreiter Ausführung der Speicher.

Für den Soll-Istwert-Vergleich in digitalen Regelkreisen ist nicht nur die Feststellung der Übereinstimmung zwischen einer im Speicher markierten Sollwertadresse mit der angelegten, dem jeweils aktuellen Istwert entsprechenden Adresse erforderlich, sondern bei Zwei- bzw. bei Dreipunktregelungen auch eine qualitative Aussage, ob der aktuelle Istwert jeweils größer oder kleiner als der Sollwert ist und bei quasistetigen Regelungen zusätzlich auch noch eine quantitative Aussage, wie groß jeweils die Soll-Istwert-Differenz, d.h. die Regelabweichung ist. Den grundsätzlichen Speicheraufbau hierfür zeigt Figur 5. Gestrichelt hervorgehoben ist darin die in der der Sollwertadresse zugeordneten Speicherzeile eingetragene charakteristische Information. Für die Abfrage einer Information, wie sich der Istwert relativ zum Sollwert verhält, dienen die den beiden Datenausgängen D0 und D1 zugeordneten Spalten eines mit RAM bezeichneten Schreib-Lesespeichers. An der Sollwertadresse besteht diese charakteristische Information aus dem logischen Wert "11", für Adressen, welche kleiner als die Sollwertadresse sind, ist der logische Wert "01" eingetragen und für Adressen, welche größer als die Sollwertadresse sind, besteht die charakteristische Information aus dem Wert "00". Einem UND-Gatter 4 wird das invertierte Signal der Datenausgangsleitung D1 und das Signal der Datenausgangsleitung D0 zugeführt, so daß an dessen mit al bezeichneten Ausgang ein "1"-Signal entsteht, wenn die Istwertadresse kleiner ist als die Sollwertadresse, d.h. die Differenz zwischen Sollwert und Istwert positiv ist. Am Ausgang des UND-Gatters 5, dessen Eingänge mit den Datenleitungen D0 und D1 verbunden sind, erscheint dann ein "1"-Signal, wenn die Istwertadresse mit der Sollwertadresse übereinstimmt, während am Ausgang des eingangsseitig mit dem Signal der Datenausgangsleitung D0 verbundenen Inverters 6 ein "1"-Signal auftritt, wenn der Istwert größer als der Sollwert, d.h. die Regelabweichung negatives Vorzeichen aufweist.

Der für n Adreßleitungen A0 bis An-1 ausgelegte Schreib-Lesespeichers RAM ist weiterhin noch um eine Spaltenzahl erweitert, welche der Anzahl der Adreßleitungen entspricht und in jeder einer Adresse zugeordneten Zeile ist ihr relativer Abstand zur Sollwertadresse in dual kodierter Form eingetragen. So ist der Wert der der Sollwertadresse benachbarten Zeilen 1, der der sich daran anschließenden Zeilen 2 usf.. Mit einem Schreibbefehl WR kann der Schreib-Lesespeicher RAM entsprechend der anliegenden Adresse zeilenweise ausgelesen werden, wobei dann an den Datenausgängen D2 bis Dn + 1 der Betrag $|\Delta|$ der Regelabweichung, an den Ausgängen a1 oder a3 "1"-Signale bei entsprechenden Vorzeichen der Regelabweichung oder am Ausgang a2 ein "1"-Signal bei Übereinstimmung zwischen Soll- und Istwert erhalten werden.

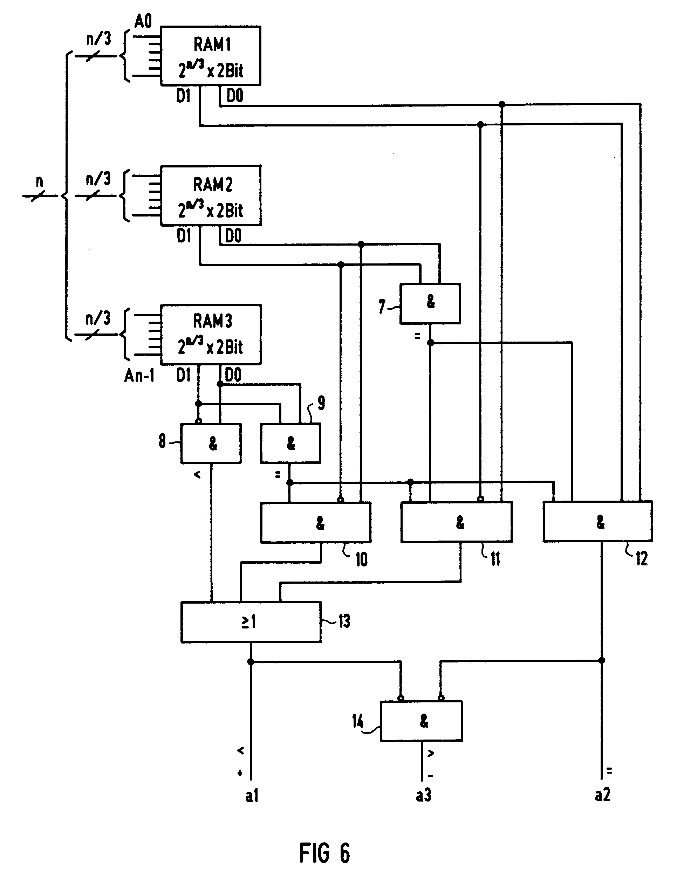

Figur 6 ist ein Beispiel für die Ausgestaltung mit Reduzierung der zu dekodierenden Adressen durch Aufteilung der Adreßleitungen in drei Gruppen für eine digitale Zweipunkt- oder Dreipunktregelung. Die Schreib-Lesespeicher RAM1 bis RAM3 sind zweibitbreit und in ihren Speicherzellen ist jeweils die charakteristische Kennung entsprechend der in Figur 5 dargestellten Weise abgelegt. Pro Adreßleitungsgruppe kann also festgestellt werden, ob die ihr zugeordnete Teilsollwertadresse größer, gleich oder kleiner ist als die entsprechende Teilistwertadresse. Die Auswertung dieser auf die einzelne Gruppe bezogenen Teilinformationen erfolgt mittels einer aus den Gattern 7 bis 14 bestehenden logischen Schaltung unter Berücksichtigung der Gewichtung der einzelnen Gruppen. Grundsätzlich bestimmt die höchst wertige Gruppe das Vorzeichen der Regelabweichung und sofern bei ihr eine Übereinstimmung zwischen Soll-und Istwertadresse festgestellt wird, geht diese Funktion auf die nächst niedriger wertige Gruppe über. Es werden also mit den UND-Gattern 8 und 9, welche in Figur 5 den UND-Gattern 4 und 5 entsprechen geprüft, ob der Istwert kleiner ist als der Sollwert. Ist dies der Fall, dann erscheint am Ausgang des ODER-Gatters 13 ein "1"-Signal. Da dann gleichzeitig der Ausgang des UND-Gliedes 9 ein "0"-Signal aufweist, werden mit diesem Signal die UND-Gatter 10, 11 und 12 gesperrt. Ist dagegen die Istwertadresse bei der dem RAM3 zugeordneten höchst wertigen Gruppen größer als die dortige Sollwertadresse, dann sind die Ausgangssignale der UND-Gatter 8 und 9 beide logisch "0", desgleichen das Ausgangssignal des ODER-Gatters 13 und das Ausgangssignal des UND-Gatters 12, so daß der Ausgang des UND-Gatters ein "1"-Signal ist. Besteht dagegen bei der höchst wertigen Gruppe Übereinstimmung zwischen Istwert und Sollwert, dann weist von den Ausgangssignalen der Gatter 8 und 9 nur das Ausgangssignal des Gatters 9 ein "1"-Signal auf, mit welchem die UND-Gatter 10, 11 und 12 dazu vorbereitet werden, die Vorzeichenauswertung mit den Datenausgangssignalen D0 und D1 der nächstniederen Adreßleitungsgruppe in genau derselben Weise vorzunehmen: Ist D1 = 0 und D0 = 1, dann ist die Istwertadresse bei der dem Schreib-Lesespeicher RAM2 zugeordneten Adreßleitungsgruppe kleiner als der Sollwert und am Ausgang des UND-Gatters 10 und damit auch des ODER-Gatters 13 erscheint ein "1"-Signal, während das gleichzeitig anstehende "0"-Signal am Ausgang des UND-Gatters 7 die UND-Gatter 11 und 12 sperrt. Ist auch bei der dem RAM2 zugeordneten Adreßleitungsgruppe eine Übereinstimmung zwischen Soll- und Istwert erreicht, erscheint am Ausgang des UND-Gatters 7 ein "1"-Signal, womit dann die Bestimmung des Vorzeichens der Regelabweichung auf die Gruppe mit niedrigster Wertigkeit übergeht bis schließlich am Ausgang des UND-Gatters 12 ein "1"-Signal erscheint, wenn in allen drei Schreib-Lesespeichern Übereinstimmung zwischen Soll- und Istwertadresse herrscht, d.h. die Regelabweichung zu Null geworden ist.

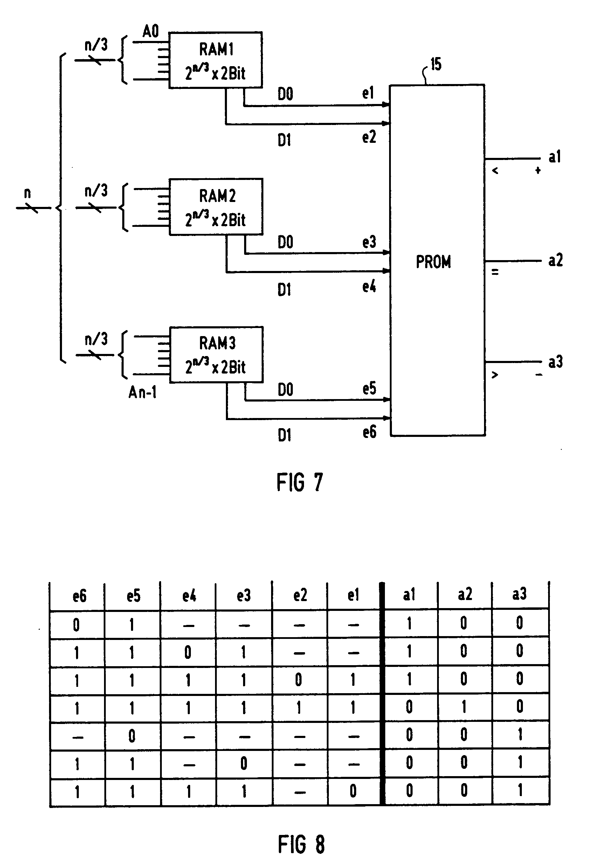

Figur 7 zeigt eine Variante des in Figur 6 dargestellten Soll-Istwertvergleichers, wobei die dort aus Einzelgattern 7 bis 14 bestehende logische Schaltung durch einen Nur-Lesespeicher 15 in Form eines PROMs (Programmable Read Only Memory) verwirklicht ist. Die Datenausgänge D0 und D1 der einzelnen Schreib-Lesespeicher RAM1 bis RAM3 sind mit den Eingängen e1 bis e6 des Nur-Lesespeichers 15 verbunden und den Zusammenhang zwischen den Signalzuständen dieser Eingänge und den Signalzuständen der Ausgänge a1, a2 und a3 des Nur-Lesespeichers 15 zeigt die zugehörige Wahrheitstabelle der Figur 8. In der rechten Hälfte derselben sind in üblicher Weise zeilenweise die Signalzustände der Eingangsleitungen e1 bis e6 eingetragen, mit denen sich die Signalzustände der Ausgänge a1 bis a3 ergeben sollen, wobei waagrechte rechte Striche in den Feldern der linken Tabellenhälfte darauf hinweisen, daß der Signalzustand der zugeordneten Eingangsleitung bedeutungslos ist. So muß z.B. unabhängig von den Signalzuständen der Eingangssignale e1 bis e4 lediglich der Signalzustand von e6 = 0 und von e5 = 1 sein, um am Ausgang a1 ein "1"-Signal hervorzurufen, womit eine positive Regelabweichung ($\Delta$) bzw. ein Istwert, der kleiner ist als der Sollwert charakterisiert wird. Dies und auch die in den übrigen Zeilen dieser Wahrheitstabelle formulierten Bedingungen stehen im Einklang mit der Auswertung gemäß Figur 6.

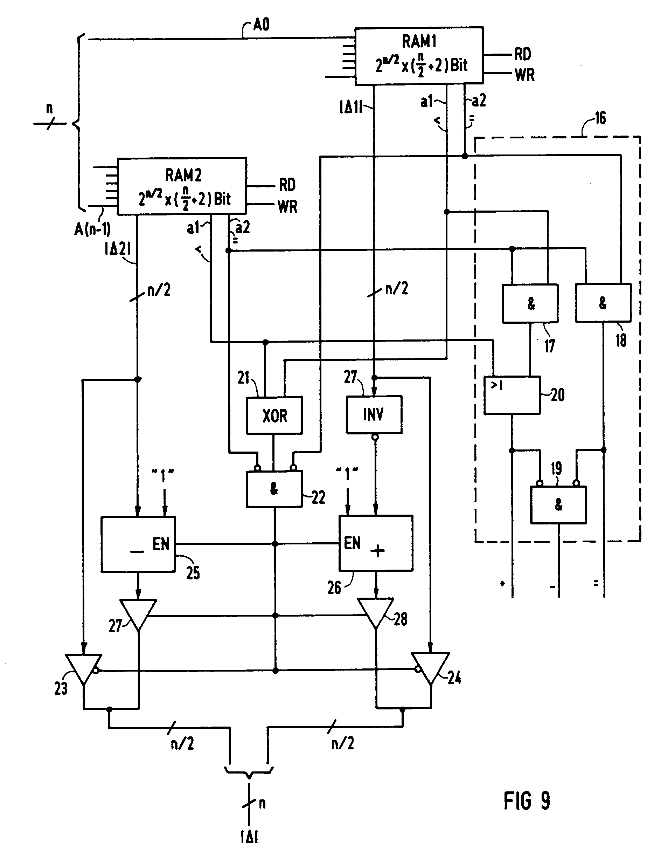

Figur 9 zeigt eine Ausführung eines Soll-Istwert-Vergleichers dargestellt, mit welcher nicht nur das Vorzeichen der Regelabweichung, sondern auch ihr Betrag ausgegeben werden kann. Die Adreßleitungen A0 bis An-1 sind hier zur Hälfte auf zwei Schreib-Lesespeicher RAM1 und RAM2 aufgeteilt, wobei der Aufbau jedes der beiden Schreib-Lesespeicher mit dem in Figur 5 beschriebenen übereinstimmt. Jeder der beiden Schreib-Lesespeicher enthält also zwei Spalten, deren Datenausgänge von zwei UND-Gattern ausgewertet werden und "1"-Signale an den Ausgängen a1 oder a2 dieser in der Figur 9 nicht dargestellten UND-Gatter geben Aufschluß, ob eine ihrer Adreßleitungsgruppe zugeordnete Istwertadresse kleiner als die oder gleich der Sollwertadresse ist. Die Ausgangsleitungen a1 und a2 der beiden Schreib-Lesespeicher RAM1 und RAM2 sind mit einem aus drei UND-Gattern 17, 18 und 19 und einem ODER-Gatter 20 bestehendem Vorzeichenbildner 16 verbunden, der, wie ersichtlich, ebenfalls nach der im Zusammenhang mit Figur 6 geschilderten Methode arbeitet, wonach die höher wertige Adreßleitungsgruppe das Vorzeichen bestimmt, solange bei ihr noch keine Übereinstimmung zwischen Sollwert- und Istwertadresse (a2 = 1) aufgetreten ist und sodann diese Funktion auf die andere Adreßleitungsgruppe übergeht.

Es hängt nun von der jeweiligen relativen Lage der Istwertteiladressen zu den Sollwertteiladressen in den beiden Schreib-Lesespeichern RAM1 und RAM2 ab, wie die per Schreibbefehl WR ausgebbaren, gewichteten Beträge der in den Schreib-Lesespeichern RAM1 und RAM2 abgelegten Teilregelabweichungen $|\Delta 1|$ und $|\Delta 2|$ zu der Gesamtregelabweichung $|\Delta|$ verarbeitet werden: Weisen die beiden Teilregelabweichungen $|\Delta 1|$ und $|\Delta 2|$ dasselbe Vorzeichen auf oder stimmt mindestens in einem Schreib-Lesespeicher Teilistwert und zugehöriger Teilsollwert überein (a2 = 1), dann werden die Teilregelabweichungen $|\Delta 1|$ und $|\Delta 2|$ unverändert zu der Gesamtregelabweichung $|\Delta|$ zusamengesetzt, d.h. stellenrichtig addiert, anderenfalls wird die niedriger wertige Teilregelabweichung $|\Delta 1|$ stellenrichtig von der höher wertigen Teilregelabweichung subtrahiert. Dies wird von einem XOR-Gatter 21 gesteuert, dem die "Kleiner"-Ausgänge a1 der beiden Schreib-Lesespeicher eingangsseitig zugeführt sowie von einem diesem nachgeschalteten UND-Gatter 22, dessen beiden weiteren Eingänge von den invertierten Signalen der Ausgänge a2 der Schreib-Lesespeicher beaufschlagt werden. Haben die Signale an dem mit a1 bezeichneten Ausgang der beiden Schreib-Lesespeicher den gleichen Pegel, d.h. sind beide logisch "1" oder beide logisch "0", dann weist der Ausgang des XOR-Gatters 21 und damit auch der Ausgang des UND-Gatters 22 ein "0"-Signal auf, womit die Teilregelabweichungen $|\Delta 1|$ und $|\Delta 2|$ über Datentore 23 und 24 unverändert durchgeschaltet und stellenrichtig addiert am Ausgang als Gesamtregelabweichung $|\Delta|$ erscheinen. Eine solche Durchschaltung über die Datentore 23 und 24 findet ebenfalls statt, sofern mindestens einer der Ausgänge a2 der Schreib-Lesespeicher ein "1"-Signal aufweist. Sind jedoch die Signale an den Ausgängen a1 der beiden Schreib-Lesespeicher verschieden und weist bei einem der Schreib-Lesespeicher sowohl der Ausgang a1 als auch der Ausgang a2 ein "0"-Signal auf, dann erscheint am Ausgang des UND-Gatters 22 ein "1"-Signal, mit welchem in ein Subtrahierwerk 25 aktiviert wird, um den Betrag der Regelabweichung $|\Delta 2|$ um den Wert 1 zu vermindern. Mit dem "1"-Signal des UND-Gatters 22 wird gleichzeitig auch ein Addierwerk 26 aktiviert, um die mittels einer Invertiereinrichtung 27 invertierte, d.h. jeweils bitweise zum Wert 1 komplementierte Regelabweichung $|\Delta 1|$ um den Wert 1 zu erhöhen. Der Ausgang des Addierwerks 26 stellt somit das Zweierkomplement der Teilregelabweichung $|\Delta 1|$ zur Verfügung. Das "1"-Signal des UND-Gatters 22 aktiviert ferner zwei Datentore 27 und 28, womit die Ausgänge des Subtrahierwerkes 25 und des Addierwerkes 26 zum Ausgang durchgeschaltet werden und so stellenrichtig die Differenz $|\Delta 2| - |\Delta 1|$ gebildet ist. Da in den Rechenwerken 25 und 26 jeweils nur ihre Eingangsgröße um den Wert 1 zu verändern ist, können sie entsprechend einfach aufgebaut sein, indem sie pro Bitstelle jeweils nur eine an sich bekannte Halbaddierer- bzw. Halbsubtrahiererstufe enthalten, welche ihrerseits nur aus zwei Gattern besteht.

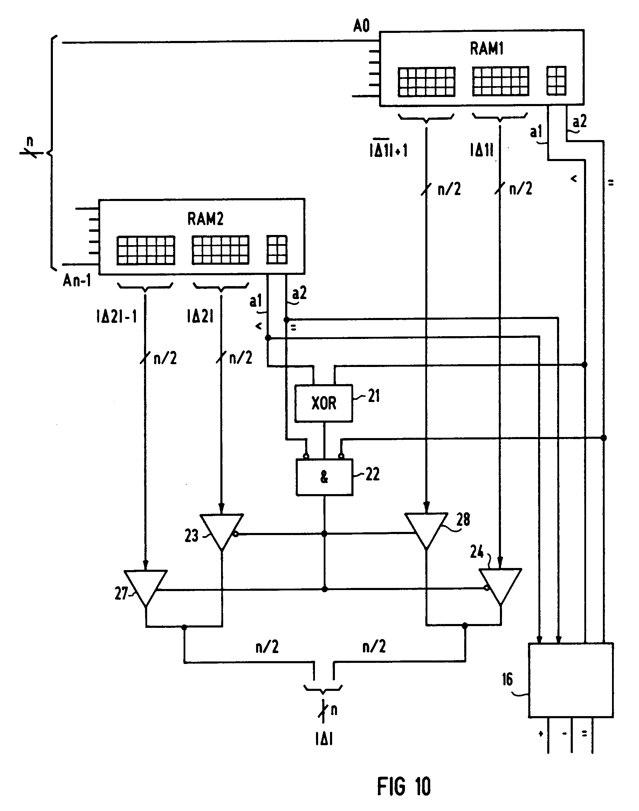

Figur 10 zeigt eine Variante, welche ohne die Rechenwerke 25 und 26 sowie ohne die Invertiereinrichtung 27 auskommt, indem die von diesen Bauelementen fallweise zu erarbeitenden Resultate für jeden möglichen Istwert in den Schreib-Lesespeicher RAM1 und RAM2 bereitgehalten werden. Hierzu wird die Bitbreite dieser Schreib-Lesespeicher bei n Adreßleitungen A0 bis An-1 gegenüber ihrem in Figur 9 dargestellten Speicherausbau um n/2 Bit erweitert und bei dem der höher wertigen Adreßleitungsgruppe zugeordneten Schreib-Lesespeicher RAM2 die jeweilige Adreßdifferenz zur vorgegebenen Teilsollwertadresse, um den Wert 1 vermindert eingetragen ($|\Delta 2|-1$) und bei dem der niedriger wertigen Adreßleitungsgruppe zugeordneten Schreib-Lesespeicher RAM1 der um 1 vergrößerte invertierte Wert - als Zweierkomplement - der Adreßdifferenz zur Teilsollwertadresse ($|\overline{\Delta 1}| + 1$). Damit stehen unter Vermeidung zeitaufwendiger Rechenoperationen für jede Istwertadresse, d.h. für jeden möglichen Istwert, die Teilergebnisse einer vorzeichengerechten bewichteten Addition sofort zur Verfügung und diese werden in genau der gleichen Weise wie in Figur 9 beschrieben mittels des XOR-Gatters 21 und des ihm nachgeordneten UND-Gatters 22 über die Datentore 23, 24 bzw. 27, 28 durchgeschaltet, d.h. zum Betrag der Gesamtregelabweichung $|\Delta|$ zusammengesetzt, während das Vorzeichen dieser Abweichung ebenfalls wie bei der Anordnung nach Figur 9 vom Vorzeichenbildner 16 ermittelt wird.

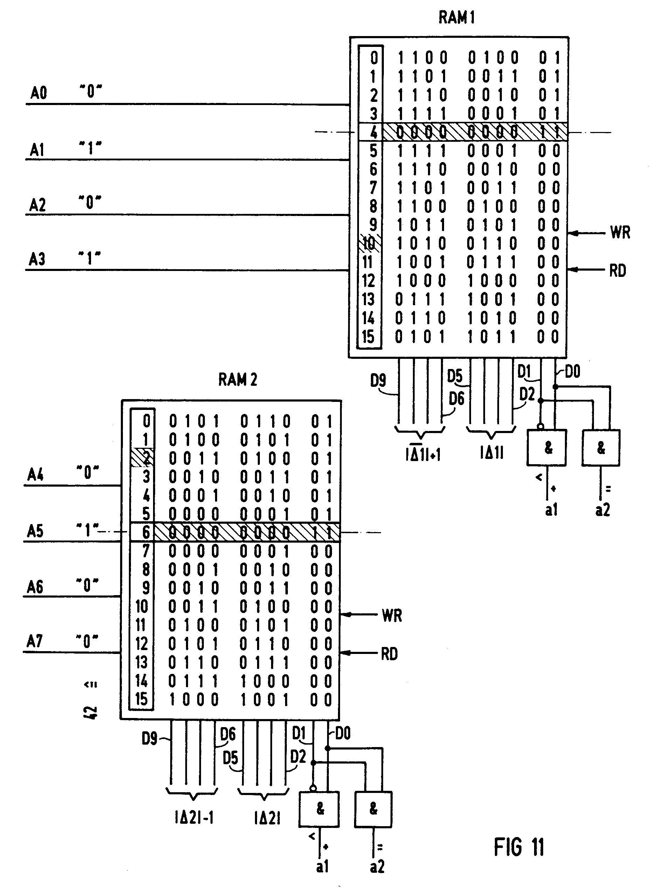

Figur 11 stellt ein konkretes Zahlenbeispiel zur Anordnung gemäß Figur 10 dar. Zugrundegelegt ist ein Soll-Istwert-Vergleicher mit acht Adreßleitungen A0 bis A7, womit sich ein Istwertbereich von 0 bis 255 ergibt. Die Adreßleitungen A0 bis A3 bilden die nieder wertige Gruppe und sind dem Schreib-Lesespeicher RAM1 zugeführt, während die Adreßleitungen A4 bis A7 die höher wertige Adreßleitungsgruppe bilden und den Schreib-Lesespeicher RAM2 beaufschlagen. Die im RAM1 dekodierten Adressen sind also mit $16^0 = 1$, die im RAM2 dekodierten Adressen mit $16^1 = 16$ bewichtet. Die der Sollwertadresse zugeordneten Speicherzeilen sind schraffiert hervorgehoben, woraus ersichtlich wird, daß die vorgegebene Sollwertadresse $6 \times 16 + 4 \times 1 = 100$ ist. Als Istwert soll an die Adreßleitungen A0 bis A3 der Dezimalwert 42 in dualer Kodierung anliegen, was den an diesen Adreßleitungen angegebenen Signalzuständen entspricht. Damit sind in den Schreib-Lesespeichern die ebenfalls schraffiert hervorgehobenen Adressen angesteuert, nämlich in dem der niedriger wertigen Adreßleitungsgruppe zugeordneten Schreib-Lesespeicher RAM1 die Adresse 10 und in den der höher wertigen Adreßleitungsgruppe zugeordneten Schreib-Lesespeicher RAM2 die Adresse 2. Die der Vorzeicheninformation zugeordneten Ausgangssignale des Schreib-Lesespeichers RAM1 sind $a1 = 0$ und $a2 = 0$, während die entsprechenden Ausgangssignale des Schreib-Lesespeichers RAM2 $a1 = 1$ und $a2 = 0$ sind. Entsprechend der im Zusammenhang mit Figur 10 geschilderten Wirkungsweise der in Figur 11 nicht dargestellten Gatter 21 und 22 werden deshalb bei beiden Schreib-Lesespeichern die Datenleitungen D6 bis D9 durch entsprechende Aktivierung der diesen zugeordneten Datentore 27 bzw. 24 durchgeschaltet. Es ergibt sich dann ausgangsseitig der Betrag der Gesamtregelabweichung $|\Delta|$ zu $00111010 = 58$, was den Betrag der Differenz zwischen einem Sollwert von 100 und einem Istwert von 42 entspricht, während als Vorzeichen der Regelabweichung sich bei dem in Figur 11 nicht dargestellten Vorzeichenbildner 16 nur an seinem mit + bezeichneten Ausgang ein "1"-Signal einstellen wird.

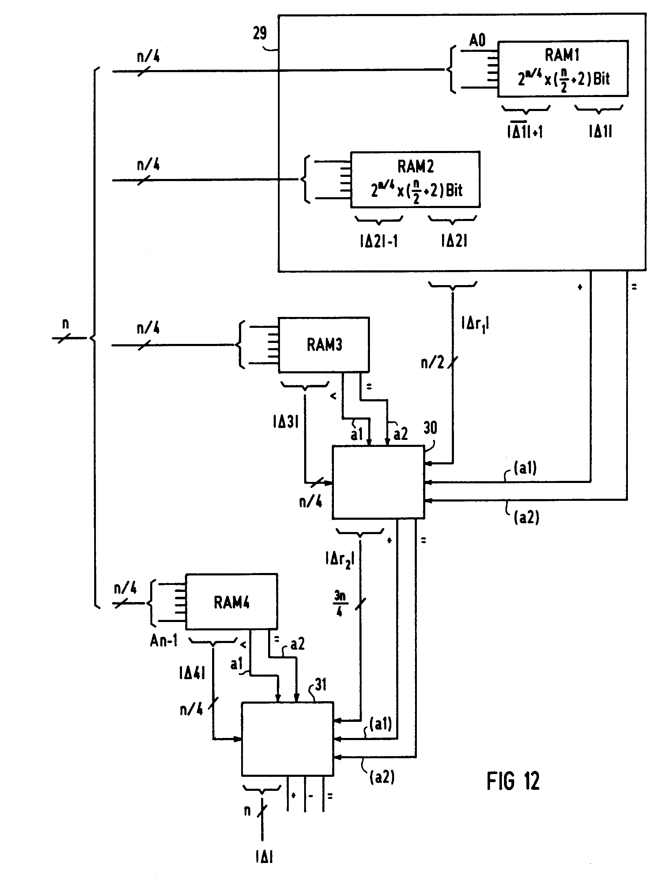

Das Blockschaltbild der Figur 12 zeigt schematisch, wie ein erfindungsgemäßer Soll-Istwert-Vergleicher für mehr als zwei Adreßleitungsgruppen, im dargestellten Beispiel für vier Adreßleitungsgruppen, realisiert werden kann. Die für die Darstellung des Istwertdatums erforderlichen n Adreßleitungen A0 bis An-1 sind gleichmäßig auf vier Schreib-Lesespeicher RAM1 bis RAM4 aufgeteilt. Der mit 29 bezeichnete Funktionsblock enthält bis auf das bei ihm fehlende UND-Gatter 19 die in Figur 10 dargestellte Anordnung und bewirkt so die vorzeichengerechte bewichtete Addition der Teilregelabweichungen, welche den beiden am niedrigsten wertigen Adreßleitungsgruppen zugeordnet ist. Mit der vom Funktionsblock 29 ausgegebenen, n/2-bitbreiten Teilregelabweichung $|\Delta r_1|$ sowie den Signalen seiner mit " + " und und " = " bezeichneten Ausgangsleitungen wird ein mit 30 bezeichneter Funktionsblock beaufschlagt, dem weiterhin noch die im RAM3 abgelegte Teilregelabweichung |Δ3| und - analog wie bei der Anordnung gemäß Figur 9 - die Signale der mit a1 und a2 bezeichneten Ausgänge zugeführt sind. Der Funktionsblock 30 enthält mit Ausnahme der Schreib-Lesespeicher und des UND-Gatters 19 die Anordnung gemäß Figur 9, wobei die Bitbreite der das 1-Komplement bildenden Invertiereinrichtung 27, des Addierwerks 26 sowie der Datentore 24 und 28 doppelt so groß ist wie die Bitbreite des Subtrahierwerks 25 und der Datentore 23 bzw. 27. Wenn man berücksichtigt, daß die mit "+" bezeichnete Ausgangsleitung des Funktionsblocks 29 äquivalent ist zu der mit a1 bezeichneten Ausgangsleitung des Schreib-Lesespeichers RAM1 in Figur 9, indem sie ebenfalls bei einer positiven Regelabweichung (Istwert kleiner als Sollwert) "1"-Signal aufweist und die mit "=" bezeichnete Ausgangsleitung des Funktionsblocks 29 der in Figur 9 mit a2 bezeichneten Ausgangsleitung des Schreib-Lesespeichers RAM1 entspricht, dann wird unter Hinzuziehung der Figur 9 samt zugehöriger Beschreibung deutlich, daß am Ausgang des Funktionsblocks eine 3.n/4-bitbreite Teilregelabweichung |Δr$_2$| erhalten wird, welche vorzeichenrichtig aus den Teildaten der drei am niedrigsten wertigen Adreßleitungsgruppen gebildet wurde. In analoger Weise wird in der nachfolgenden, den mit 31 bezeichneten Funktionsblock und den vierten Schreib-Lesespeicher RAM4 enthaltenden Stufe, die von der am höchsten wertigen Adreßleitungsgruppe gebildete Teilregelabweichung |Δ4| vorzeichengerecht zu der vom Funktionsblock 30 ausgegebenen Teilregelabweichung |Δr$_2$| addiert. Der mit 31 bezeichnete Funktionsblock enthält die Elemente 21 bis 28 sowie 17 bis 20 der in Figur 9 dargestellten Anordnung, wobei die Bitbreite der Elemente 24, 26, 27 und 28 auf die Bitbreite der zu verarbeitenden Teilregelabweichung |Δr$_2$| vergrößert ist. Am Ausgang des Funktionsblockes 31 kann also in gleicher Weise wie bei den Anordnungen entsprechend der Figuren 9 und 10 der Betrag der Gesamtregelabweichung |Δ| erhalten sowie ihr Vorzeichen identifiziert werden.

Das in der Figur 12 dargestellte Prinzip kann bei jeder beliebigen Anzahl von Adreßleitungsgruppen angewendet werden und anstelle der in den Ausführungsbeispielen dargestellten Schreib-Lesespeicher in Form von RAMs könnten auch andere, an bestimmten (Sollwert-)Adressen beschreibbare und adreßgesteuert auslesbare Speicher verwendet werden, wie sie z.B. unter den Bezeichnungen EPROM oder EEPROM bekannt sind, falls die gegenüber einem RAM langsamere und etwas umständlichere Beschreibbarkeit in Kauf genommen werden kann. Dies kann für die Fälle gelten, wo eine Änderung der bestimmten (Sollwert-)Adresse weniger häufig vorkommt oder diese, wie z.B. bei Festwertregelungen, nicht in schneller Folge geändert zu werden braucht.

## Patentansprüche

1. Einrichtung zum Vergleich zweier dual kodierter Daten, insbesondere zweier Adressen, wobei

   a) mehrere Speicher vorgesehen sind, in denen charakteristische Informationen relativ zu einer bestimmten, das Vergleichsdatum abbildenden Adresse abgelegt sind, welche von einem zweiten, mit dem Vergleichsdatum zu vergleichenden Datum adreßgesteuert ausgebbar sind,
   b) die Adreßleitungen gruppenweise auf die einzelnen Speicher gleichmäßig verteilt und die ausgegebenen charakteristischen Informationen in Abhängigkeit von der Gewichtung der zugehörigen Adreßleitungsgruppe auswertbar sind.

2. Einrichtung nach Anspruch 1, **dadurch gekennzeichnet,** daß die Speicher 1-bitbreit sind, als charakteristische Information nur an der bestimmten Adresse logisch "1" abgelegt ist und der Datenausgang jedes Speichers entweder mit einem Eingang eines UND-Gatters (2) oder mit dem Lesesteuereingang (RD) des Speichers verbundenist, welcher der nächsten höherwertigen Adreßleitungsgruppe zugeordnet ist.

3. Einrichtung nach Anspruch 1, **dadurch gekennzeichnet,** daß für den Vergleich mit mehreren bestimmten Adressen Speicher entsprechender Bitbreite vorgesehen sind und die jeweils einer bestimmten Adresse zugeordneten Datenausgänge (D1 - Dm) mit den Eingängen eines UND-Gatters verbunden sind.

4. Einrichtung nach Anspruch 1, **dadurch gekennzeichnet,** daß zur Ablage einer Information, ob eine aktuelle Adresse kleiner, gleich oder größer als die bestimmte Adresse ist, 2-bitbreite Speicher vorgesehen und die Datenausgänge der Speicher mit einer logischen Auswerteschaltung verbunden sind.

5. Einrichtung nach Anspruch 4, **dadurch gekennzeichnet,** daß als logische Auswerteschaltung ein Nur-Lesespeicher (15) vorgesehen ist.

6. Einrichtung nach Anspruch 4, **dadurch gekennzeichnet,** daß die Bitbreite der Speicher um die Zahl der ihnen zugeführten Adreßleitungen erweitert ist, in jeder Zeile dieser Erweiterung in dual kodierter Form die jeweilige Adreßdifferenz dieser Bitzeile zu der bestimmten Adresse abgelegt ist und mittels des bei jedem Speicher von Zwei UND-Gattern (4, 5) ermittelten Vorzeichens dieser Differenzen ihre vorzeichengerechte bewichtete Addition vorgesehen ist.

7.  Einrichtung nach Anspruch 6, **gekennzeichnet** durch ein mit den "Kleiner"-Informationen der Speicher (<, +) beaufschlagtes XOR-Gatter (21) zur Steuerung der bewichteten, vorzeichengerechten Addition, dem ein UND-Gatter (22) nachgeordnet ist, welches an zwei weiteren Eingängen mit der invertierten "Gleich"-Information (=) der beiden Speicher beaufschlagt ist.

8.  Einrichtung nach Anspruch 6, **gekennzeichnet** durch eine Invertiereinrichtung (27) und ein Addierwerk (26) für die Signale der niedrigerwertigen Gruppe von Datenausgängen und ein Subtraktionswerk (25) für die Signale der höherwertigen Gruppe von Datenausgängen.

9.  Einrichtung nach Anspruch 7, **dadurch gekennzeichnet,** daß die Bitbreite der Speicher nochmals um die Zahl der ihnen zugeführten Adreßleitungen erweitert ist und in jeder Zeile dieser Erweiterung bei dem die höherwertige Adressen verarbeitenden Speicher die um den Wert 1 verminderte Adreßdifferenz und bei dem anderen Speicher der zum Wert 1 komplementierte invertierte Wert der Adreßdifferenz, um den Wert 1 erhöht, abgelegt ist (Figur 10).

10.  Einrichtung nach einem der vorhergehenden Ansprüche, **dadurch gekennzeichnet,** daß die Speicher als Schreib-Lesespeicher (RAM) ausgeführt sind.

11.  Einrichtung nach Anspruch 4 oder einem der folgenden, **gekennzeichnet** durch ihre Verwendung als Soll-Istwert-Vergleicher in digitalen Regelkreisen.

FIG 1

FIG 2

FIG 3

FIG 4

RAM1
$2^{12}$ x 8 Bit

A0 - A11

3

A0 - A23

A12 - A23

RAM2
$2^{12}$ x 8 Bit

D7 . . . . . . D0

D7 . . . . . . D0

&

&

K7

K0

FIG 5

A0

n

A(n-1)

RAM
$2^{a}$ x (n+2) Bit

WR

RD

D(n+1)

D3

D2

D1

D0

n

|Δ|

4

5

6

&

&

<

=

>

a1

a2

a3

FIG 6

FIG 7

| e6 | e5 | e4 | e3 | e2 | e1 | a1 | a2 | a3 |
|----|----|----|----|----|----|----|----|----|
| 0 | 1 | — | — | — | — | 1 | 0 | 0 |
| 1 | 1 | 0 | 1 | — | — | 1 | 0 | 0 |
| 1 | 1 | 1 | 1 | 0 | 1 | 1 | 0 | 0 |
| 1 | 1 | 1 | 1 | 1 | 1 | 0 | 1 | 0 |
| — | 0 | — | — | — | — | 0 | 0 | 1 |
| 1 | 1 | — | 0 | — | — | 0 | 0 | 1 |
| 1 | 1 | 1 | 1 | — | 0 | 0 | 0 | 1 |

FIG 8

FIG 9

FIG 10

RAM1

| 0 | 1 1 0 0 | 0 1 0 0 | 0 1 |
| 1 | 1 1 0 1 | 0 0 1 1 | 0 1 |
| 2 | 1 1 1 0 | 0 0 1 0 | 0 1 |
| 3 | 1 1 1 1 | 0 0 0 1 | 0 1 |
| 4 | 0 0 0 0 | 0 0 0 0 | 1 1 |
| 5 | 1 1 1 1 | 0 0 0 1 | 0 0 |
| 6 | 1 1 1 0 | 0 0 1 0 | 0 0 |
| 7 | 1 1 0 1 | 0 0 1 1 | 0 0 |
| 8 | 1 1 0 0 | 0 1 0 0 | 0 0 |
| 9 | 1 0 1 1 | 0 1 0 1 | 0 0 |
| 10 | 1 0 1 0 | 0 1 1 0 | 0 0 |
| 11 | 1 0 0 1 | 0 1 1 1 | 0 0 |
| 12 | 1 0 0 0 | 1 0 0 0 | 0 0 |
| 13 | 0 1 1 1 | 1 0 0 1 | 0 0 |
| 14 | 0 1 1 0 | 1 0 1 0 | 0 0 |
| 15 | 0 1 0 1 | 1 0 1 1 | 0 0 |

A0    "0"

A1    "1"

A2    "0"

A3    "1"

WR

RD

D9    D5    D1    D0
      D6    D2

$|\overline{\Delta 1}|+1$    $|\Delta 1|$

&    &

<    =
+

a1    a2

RAM 2

| 0 | 0 1 0 1 | 0 1 1 0 | 0 1 |
| 1 | 0 1 0 0 | 0 1 0 1 | 0 1 |
| 2 | 0 0 1 1 | 0 1 0 0 | 0 1 |
| 3 | 0 0 1 0 | 0 0 1 1 | 0 1 |
| 4 | 0 0 0 1 | 0 0 1 0 | 0 1 |
| 5 | 0 0 0 0 | 0 0 0 1 | 0 1 |
| 6 | 0 0 0 0 | 0 0 0 0 | 1 1 |
| 7 | 0 0 0 0 | 0 0 0 1 | 0 0 |
| 8 | 0 0 0 1 | 0 0 1 0 | 0 0 |
| 9 | 0 0 1 0 | 0 0 1 1 | 0 0 |
| 10 | 0 0 1 1 | 0 1 0 0 | 0 0 |
| 11 | 0 1 0 0 | 0 1 0 1 | 0 0 |
| 12 | 0 1 0 1 | 0 1 1 0 | 0 0 |
| 13 | 0 1 1 0 | 0 1 1 1 | 0 0 |
| 14 | 0 1 1 1 | 1 0 0 0 | 0 0 |
| 15 | 1 0 0 0 | 1 0 0 1 | 0 0 |

A4    "0"

A5    "1"

A6    "0"

A7    "0"

A2 "1"

WR

RD

D9    D6    D1    D0
      D5    D2

$|\Delta 2|-1$    $|\Delta 2|$

&    &

<    =
+

a1    a2

FIG 11

FIG 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-2 110 856 (TEKTRONIX)<br><br>* Zusammenfassung *<br>* Seite 1, Zeile 45 - Seite 1, Zeile 83; Ansprüche 1-6; Abbildung 3 *<br>--- | 1-4,10, 11 | G06F1/035<br>G06F7/50<br>G06F7/02 |
| X | US-A-4 100 532 (FARNBACH)<br><br>* Zusammenfassung *<br>* Spalte 1, Zeile 62 - Spalte 3, Zeile 23; Abbildungen 2,3 *<br>--- | 1-4,10, 11 | |
| A | US-A-4 855 946 (RUBEN)<br>* Zusammenfassung *<br>* Spalte 7, Zeile 51 - Spalte 8, Zeile 15; Abbildung 5 *<br>--- | 5-9 | |
| A | IBM TECHNICAL DISCLOSURE BULLETIN.<br>Bd. 12, Nr. 2, Juli 1969, NEW YORK US<br>Seite 247;<br>BLISS ET AL: 'Table look-up carry select adder '<br>* das ganze Dokument *<br>----- | 5-9 | **RECHERCHIERTE SACHGEBIETE (Int. Cl.5 )**<br><br>G06F |

Der vorliegende Recherchenbericht wurde für alle Patentansprüche erstellt

| Recherchenort | Abschlußdatum der Recherche | Prüfer |
|---|---|---|
| DEN HAAG | 27 JUNI 1991 | COHEN B. |